# EUROPEAN PATENT SPECIFICATION

(11) **EP 3 640 478 B1**
(45) Date of publication and mention of the grant of the patent: **09.12.2020**
(21) Application number: 19203600.2
(22) Date of filing: 16.10.2019
(51) Int. Cl.: F04B 51/00, F15B 19/00

(54) **HYDRAULIC PUMP HEALTH MONITORING**
ÜBERWACHUNG DER HYDRAULIKPUMPENGESUNDHEIT
SURVEILLANCE DE L'ÉTAT D'UNE POMPE HYDRAULIQUE

(30) Priority: 18.10.2018 US 201862747257 P
(43) Date of publication of application: 22.04.2020
(73) Proprietor: Parker Hannifin Corp., Cleveland, OH 44124-4141 (US)
(72) Inventor: ANDERSON, Evan W., Galesburg, Michigan 49053 (US); KLOP, Richard, Madison, Wisconsin 53703 (US); DYKSTRA, Chris, Byron Center, Michigan 49315 (US)
(74) Representative: Davies, Gregory Mark

(56) References cited:
- DE-A1- 10 334 817
- DE-A1- 19 950 222
- DE-C1- 19 625 947
- US-A1- 2017 241 414

## Description

### Field of Invention

The present invention relates generally to hydraulic positive displacement machines, and more particularly to monitoring the health status of a hydraulic positive displacement machine to predict failure and/or estimate remaining life.

### Background of the Invention

When a hydraulic positive displacement machine, such as a hydraulic pump, fails, often the internal components of the pump are in pieces. Repair costs are significantly higher when a pump reaches this state. Furthermore, an unexpected failure can result in significant downtime. As an example, the unexpected failure of an aircraft pump can lead to a flight delay or cancellation, which can be extremely costly for the airline. Thus, the ability to monitor the health of a hydraulic pump and provide advance warning of an impending pump failure has many advantages. A Pump using monitoring its health by Fourier frequency analysis is known from DE 196 25947.

Due to the costs associated with unexpected pump failures, airlines and aircraft manufacturers have attempted to monitor pump health in a number of different ways. One method of addressing pump failure is to replace all pumps after a certain number of flight hours. This approach assumes that the pump failure rate increases with flight hours, which is not always the case. Sometimes, the failure rate of a particular fielded pump model may decrease with flight hours (infant failures) or remain constant with flight hours. Furthermore, this approach does not monitor the health of the pump, only the statistical likelihood of pump failure as a function of flight hours. With no information on the condition of the pump, this method will necessarily lead to the premature removal of some operationally acceptable pumps, and the failure to identify some operationally unacceptable pumps.

Another method of addressing pump failure is to place temperature indicating tape on the housing of the pump. When the tape indicates a certain temperature has been exceeded, the pump is removed and replaced. A failing pump may be a reason for unusually high pump housing temperatures. However, there are many other factors that affect pump housing temperature, including ambient temperature and duty cycle of the pump. Furthermore, this technique requires visual inspection of the pump to determine whether or not the temperature limit has been exceeded.

Another method of addressing pump failure is to utilize an algorithm that monitors the temperature difference between pump case temperature and reservoir temperature. This is an improvement over simply using temperature indicating tape for monitoring the health of the pump, as it is not as sensitive to ambient temperature. However, there are many other factors that affect this temperature delta, including case drain flow and duty cycle. Additionally, only a limited number of pump failure modes lead to elevated temperatures.

### Summary of the Invention

The present invention is defined by the appended claims.

A device and method in accordance with the present invention utilize frequency-domain analysis of dynamic pressure signal(s) to determine the health of a hydraulic machine. This technique provides a more direct means of monitoring the health of the machine, is not dependent on other external variables, and allows many of the most common hydraulic failure modes to be detected well in advance of a catastrophic failure.

According to one aspect of the invention, a system for predicting the health of a hydraulic machine includes: a dynamic pressure sensor configured to measure a dynamic fluid pressure corresponding to the hydraulic machine; and a controller communicatively coupled to the dynamic pressure sensor and operative to receive dynamic pressure data from the dynamic pressure sensor, the controller configured to convert the dynamic pressure data into the frequency domain, identify dynamic pressure amplitudes in the frequency domain, and generate an indication that the hydraulic machine is damaged or worn when dynamic pressure amplitudes in the frequency domain exceed a prescribed threshold and correspond to frequencies other than pumping frequencies.

In one embodiment, the system includes a speed sensor configured to measure a speed of the hydraulic machine, wherein the controller is communicatively coupled to the speed sensor and operative to receive speed data from the speed sensor, and the controller is further configured to determine at least one of a hydraulic fluid pumping frequency corresponding to the hydraulic machine or a shaft operating frequency corresponding to the hydraulic machine based on the speed data, and associate the dynamic pressure amplitudes with one of the hydraulic fluid pumping frequency or the shaft operating frequency.

In one embodiment, the system includes the hydraulic machine, wherein the pressure sensor is fluidically coupled to a fluid port of the hydraulic machine and the speed sensor is operatively coupled to the hydraulic machine.

In one embodiment, the controller is further configured to determine the hydraulic machine is normal when the amplitudes of the dynamic pressure signals at non-pumping frequencies are less than the prescribed thresholds.

In one embodiment, the controller is configured to determine the pumping frequency based on a speed of the hydraulic machine and a number of pumping elements of the hydraulic machine.

In one embodiment, the pressure sensor is in fluid communication with at least one of a discharge, a case or an inlet of the hydraulic machine.

In one embodiment, the pressure sensor is configured to collect pressure samples at a rate of at least 5 kHz.

In one embodiment, the controller is configured to analyze the dynamic pressure amplitudes in combination with hydraulic machine data other than the dynamic pressure amplitudes.

In one embodiment, the hydraulic machine data other than the dynamic pressure amplitudes comprises at least one of hydraulic machine temperature, fluid flow rate, or hydraulic machine efficiency.

In one embodiment, the controller is configured to apply a Fourier transform to the obtained dynamic pressure signals to transform the signals into the frequency domain.

The controller is configured to: trend the amplitudes of the dynamic pressure signals at non-pumping frequencies over time; compare the trended values to a threshold level; and conclude the hydraulic machine is damaged or worn when the trended dynamic pressure amplitudes exceed a prescribed threshold level.

In one embodiment, the hydraulic machine comprises a hydraulic pump or a hydraulic motor.

According to another aspect of the invention, a method for predicting the health of a hydraulic machine includes: obtaining, using a pressure sensor, dynamic pressure signals corresponding to operation of the hydraulic machine; analyzing, in the frequency domain, dynamic pressure amplitudes in the obtained dynamic pressure signals; and concluding the hydraulic machine is damaged or worn when the amplitudes of the dynamic pressure signals at non-pumping frequencies exceed the prescribed thresholds.

In one embodiment, the method includes concluding the hydraulic machine is normal when the amplitudes of the dynamic pressure signals at non-pumping frequencies are less than the prescribed thresholds.

In one embodiment, a pumping frequency corresponds to the operating speed of the hydraulic machine in revolutions per second multiplied by the number of pumping elements of the hydraulic machine multiplied by any positive integer.

In one embodiment, obtaining dynamic pressure signals comprises obtaining the signals of at least one of a discharge, a case or an inlet.

In one embodiment, obtaining the pressure signals is performed during periods of steady-state hydraulic machine operation.

In one embodiment, obtaining the pressure signals comprises obtaining the pressure signals at a rate of at least 5 kHz.

In one embodiment, analyzing comprises analyzing the dynamic pressure amplitudes in combination with hydraulic machine data other than the dynamic pressure amplitudes.

In one embodiment, the hydraulic machine data other than the dynamic pressure amplitudes comprises at least one of hydraulic machine temperature, fluid flow rate, or hydraulic machine efficiency.

In one embodiment, the analyzing and concluding steps are performed in real time.

In one embodiment, the analyzing and concluding steps are performed time-shifted relative to the obtaining step.

In one embodiment, transforming comprises applying a Fourier transform to the obtained dynamic pressure signals.

The method includes: trending the amplitudes of the dynamic pressure signals at non-pumping frequencies over time; comparing the trended values to threshold levels; and concluding the hydraulic machine is damaged or worn when the dynamic pressure amplitudes trend over prescribed threshold levels.

In one embodiment, the hydraulic machine comprises a hydraulic pump or a hydraulic motor.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### Brief Description of the Drawings

Embodiments of this invention will now be described in further detail with reference to the accompanying drawings.
Fig. 1 is a partial cut-away view of an exemplary hydraulic pump to which principles in accordance with the invention may be applied.
Fig. 2 is a graphical illustration of dynamic pressure amplitudes in the time-frequency domain for a normal healthy pump.
Fig. 3 is a graphical illustration of dynamic pressure amplitudes in the time-frequency domain for a damaged or worn pump.
Fig. 4 is a graphical illustration of the amplitude of the dynamic pressure at non-pumping frequencies over time, for a hydraulic pump that was run to failure.
Fig. 5 is a schematic diagram of an exemplary system for assessing the health of a pump and predicting pump failure in accordance with the present invention.
Fig 6. Is a flow chart illustrating steps of an exemplary method for assessing the health of a pump and predicting pump failure in accordance with the present invention.

### Detailed Description

Embodiments of the present invention will now be described with reference to the drawings, wherein like reference numerals are used to refer to like elements throughout. It will be understood that the figures are not necessarily to scale.

The present invention has applicability to hydraulic machines (e.g., hydraulic pumps, hydraulic motors), such as swash-plate-type axial piston hydraulic pumps utilized in aircraft, and therefore will be described chiefly in this context. It should be appreciated, however, that aspects of the invention are applicable to any positive displacement machine and/or application in which it is desired to predict the health of such positive displacement machine.

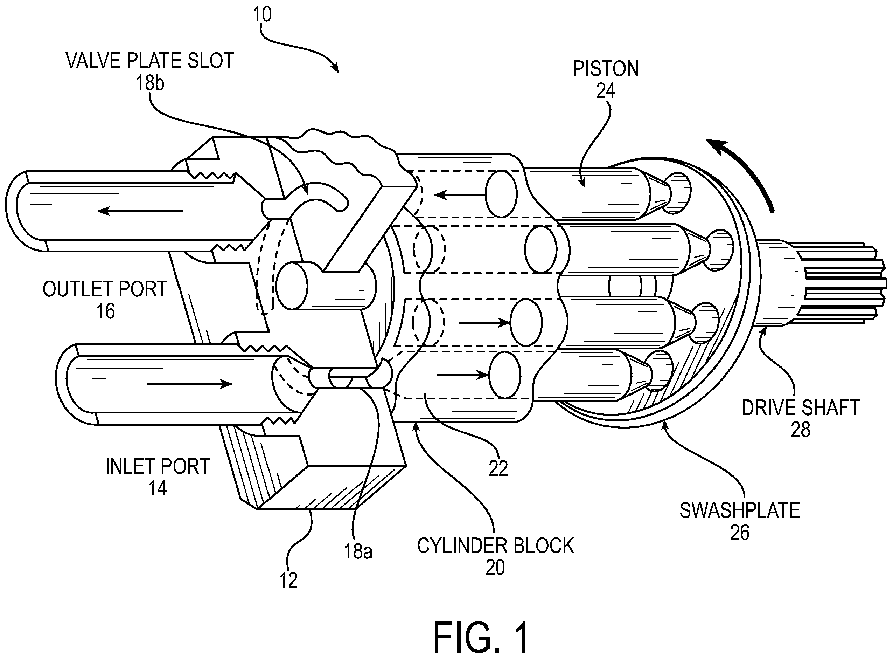

Referring to Fig. 1, illustrated is an exemplary hydraulic machine in the form of a swash-plate axial piston pump 10 to which principles of the present invention may be applied. The pump 10 includes a valve plate 12 having an inlet port 14 (also referred to as a return port or low-pressure port) that receives fluid at a first (low) pressure, and an outlet port 16 (also referred to as a supply port or high-pressure port) that outputs fluid at a second (high) pressure. The valve plate 12 includes slots 18a, 18b that are in fluid communication with the inlet port 14 and outlet port 16, respectively. A cylinder block 20 (also referred to as a rotor or barrel) includes a plurality of bores 22, where based on an angular position of the cylinder block 20 relative to the valve plate 12 each bore can be selectively in fluid communication with the slots 18a or 18b. Arranged within each bore 22 is a respective piston 24. A drive shaft 28 is coupled to the cylinder block 20.

As the drive shaft 28 rotates, this effects rotation of the cylinder block 20. The rotation also causes reciprocating motion of each piston 24, where an angle of the swashplate 26 relative to a longitudinal axis of the drive shaft 28 determines the travel of each piston 24 within its respective bore 22 (and thus the fluid displacement of the pump 10). As each piston 24 moves outward, fluid is drawn into the respective bore 22 via the inlet port 22 and slot 18a of the valve body 12. With further rotation the piston 24 begins to move inward, expelling the fluid through the slot 18b of the valve body 12 and into the outlet port 16.

For an ideal axial piston pump, each pumping element (each piston 24 and corresponding bore 22 in the exemplary pump of Fig. 1) is identical. However, in practice this is not the case as due to tolerances and other factors there may be slight variations between the pumping elements. Further, as the pump wears over time the pumping elements may not wear evenly. Instead, one or more of the pumping elements may wear much more quickly than the others, which results in uneven pump operation (referred to as imbalance). Imbalance is a self-feeding mechanism, meaning that a pump operating with some amount of imbalance will generate forces and conditions that tend to create more imbalance. Eventually, the imbalance becomes so great that a catastrophic failure occurs within the pump, and the pump stops providing flow that produces system pressure. When this happens unexpectedly, it can lead to costly repairs and unscheduled downtime for the operator.

In accordance with the present invention, frequency-domain analysis of dynamic pressure signal(s) from the hydraulic machine taken during periods of steady-state operation are analyzed to determine the health of the hydraulic machine. The pressure signals may be obtained, for example, from the outlet port 16, within the case, or the inlet port 14. It should be appreciated, however, that the pressure signals can be collected anywhere along the discharge circuit, case circuit, or inlet circuit. For example, in aircraft, an "outlet" pressure transducer is typically located in the filter manifold, which may be fifteen feet downstream of the pump. Further, frequency-domain indicators from the dynamic pressure signals may be monitored alone or in combination with other signals from operation of the hydraulic machine, such as for example temperature, flow and machine efficiency, to assess the health of the hydraulic machine.

The device and method in accordance with the invention monitors the health of the hydraulic machine by analyzing, in the frequency-domain, dynamic pressure signal(s) produced by the hydraulic machine during periods of steady-state operation. Imbalance can be detected by analyzing certain frequency-domain indicators in the dynamic pressure data.

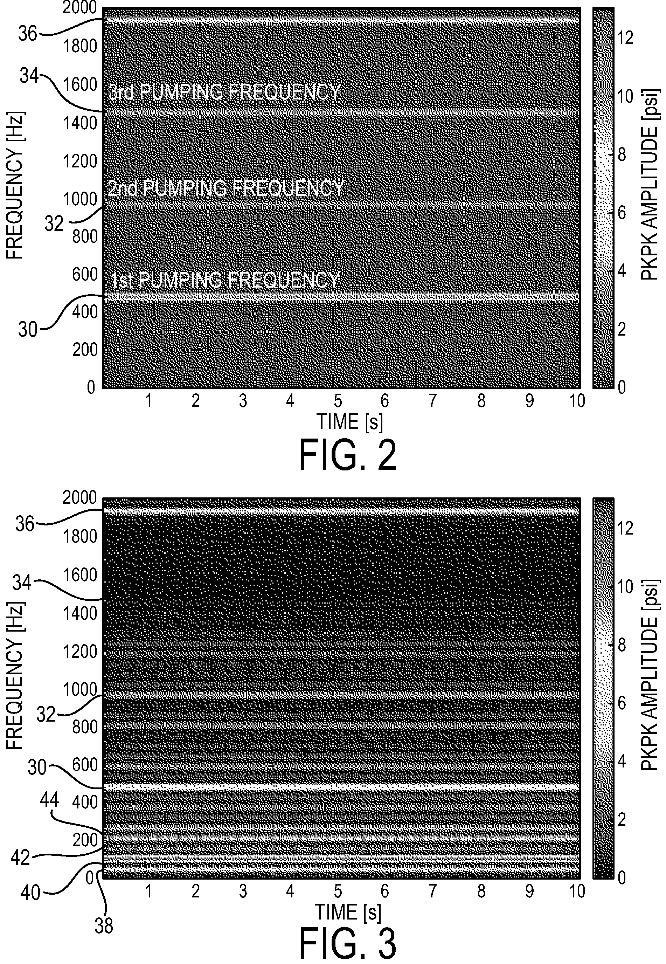

An example of a time-frequency domain representation of the dynamic pressure signal from a healthy hydraulic pump is shown in Fig. 2. Large dynamic pressure amplitudes 30, 32 and 34 can be observed at pumping frequencies, while the dynamic pressure amplitude is low at all other frequencies. Pumping frequencies are those frequencies that correspond to the speed of the hydraulic machine in revolutions per second, multiplied by the number of pumping elements, multiplied by any positive integer. For example, if a hydraulic pump has nine pumping elements (e.g., 9 pistons) and is operating at 50 revolutions per second, then pumping frequencies would correspond to integer multiples of 450 Hz (50*9).

The pumping frequencies may also be determined by analyzing the dynamic pressure measurements without knowledge of the rotational speed of the machine. For example, the first pumping frequency may be determined based on the number of pressure peaks in the dynamic pressure measurement over a prescribed time period.

An example of a time-frequency domain representation of the dynamic pressure signal from a damaged pump running at the same operating condition is shown in Fig. 3. In addition to the large dynamic pressure amplitudes 30, 32, 34 and 36 seen at the pumping frequencies, large dynamic pressure amplitudes 38, 40, 42 and 44 can be seen at non-pumping frequencies (e.g., at shaft frequencies). Shaft frequencies are those frequencies that correspond to the speed of the pump in revolutions per second (i.e., independent of the number of pumping elements), multiplied by any positive integer. For example, if a pump is operating at 50 revolutions per second, then the shaft frequencies would correspond to integer multiples of 50 Hz. The presence of large dynamic pressure amplitudes at shaft frequencies, or any other non-pumping frequencies, is an indication of pump imbalance and other pump issues.

To use this type of analysis for monitoring pump health, the dynamic pressure amplitudes of undesirable non-pumping frequencies can be trended over time during periods where the pump is operating at the same steady-state condition. One way to do this is to simply sum all dynamic pressure energy that exists at non-pumping frequencies, and trend this value. Borrowing the term "signal-to-noise ratio" from signal processing, where the pumping frequencies can be thought of as the signal, and all other frequencies can be thought of as noise, this summation of dynamic pressure amplitudes at non-pumping frequencies can be referred to as "noise power". The trended values then can be compared to a threshold level such as, for example, a first threshold level indicative of "pump wear" or a second threshold level indicative of "imminent failure". Based on the comparison, it can be concluded that the hydraulic machine is worn or damaged when the trended dynamic pressure amplitudes exceed the prescribed threshold level.

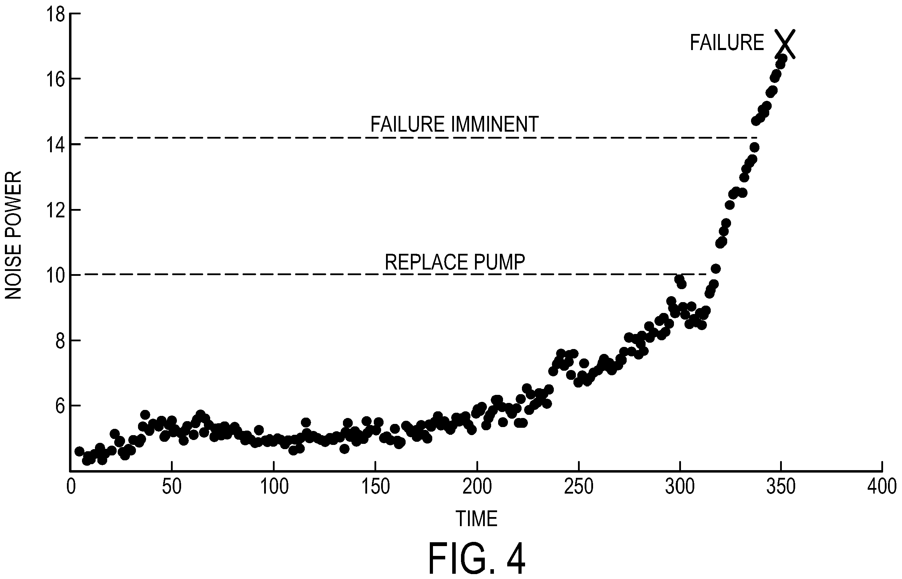

An example of the "noise power" trended over time for a failing pump can be seen in Fig. 4. In the example shown in Fig. 4, the time axis (x-axis) represents the number of flight cycles the pump has experienced, where one flight cycle is approximately two hours. The Noise Power axis (y axis) represents the total dynamic pressure energy that exists at non-pumping frequencies, as calculated in the frequency domain, and expressed in units of pressure (peak PSI, dB, etc.). As can be seen in Fig. 4, as the number of flight cycles increases, the noise power gradually increases due to pump wear. The increase in noise is relatively linear up to a certain point, and then the noise power increases at an exponential rate. Warnings can be triggered based on the noise power values or rates of change exceeding predetermined levels. For example, a first level warning can be set when the noise power reaches a level of 10, indicating that the pump should be replaced. A second level warning can be set with the noise power reaches 14, indicating that pump failure is imminent. As will be appreciated, the warning and failure levels are merely exemplary, and in practice the values may be dependent on the specific application.

When performing these calculations, care must be taken to differentiate between imbalance and control circuit instability. Control circuit instability can appear in the dynamic pressure data as a non-pumping frequency. However, instability is not an indication of pump wear/damage by itself. A simple way to avoid mistaking control circuit instability for imbalance is to apply a high pass filter to the dynamic pressure data to filter out any instability frequencies before calculating the noise power.

Another way to monitor the pump health using dynamic pressure data would be to track the amplitude of individual shaft order frequencies, without summing all non-pumping frequencies. By monitoring the amplitude of individual shaft frequencies, one may gain more insight into the specific failure mode, but at a cost of added complexity.

The setting of thresholds is the simplest way to use this type of analysis to monitor the health of a pump. For example, a warning can be set if the dynamic pressure noise power exceeds a certain level, or if the amplitude of any individual shaft order exceeds a certain level. This approach alone can be quite effective in predicting pump failure. However, more complexity can be added if other signals are available. By combining dynamic pressure data with temperature, flow, or efficiency data, the fidelity of this method may be improved. For example, a high dynamic pressure noise power reading in combination with an elevated temperature reading may be indicative of one failure mode, while a high noise power reading without elevated temperature may be indicative of a different failure mode.

This method is most effective when data are available from a large number of pumps, where thresholds can be determined by computing summary statistics of the field data. As more data are available, more sophisticated algorithms can be utilized. A pump health monitoring approach based on machine learning would utilize dynamic pressure noise power and/or shaft order amplitudes as features used to train a machine learning model.

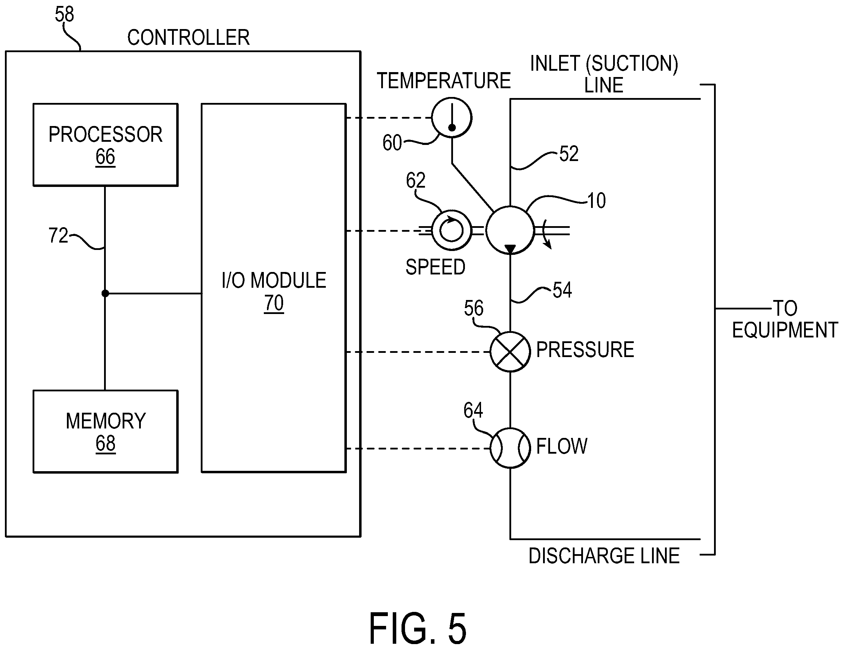

Referring now to Fig. 5, illustrated is an exemplary system 50 for monitoring the health of a hydraulic machine, such as hydraulic pump 10. The pump 10 is driven by a prime mover (not shown), which causes the pump 10 to take in fluid via return line 52 (which is connected to the inlet port 14). The pump 10 produces flow through the outlet port 16 and to source line 54. A pressure sensor 56 monitors the pressure in the source line 54 and provides the pressure data to controller 58. While the pressure sensor 56 is shown monitoring the pressure in the source line 54, it should be appreciated that the pressure could be monitored at other locations without departing from the scope of the invention. For example, pressure could be monitored at the return line 52 or within the pump itself.

In addition to the pressure sensor 56, the system 50 may optionally include a temperature sensor 60 for monitoring a temperature of the pump 10, a speed sensor 62 for monitoring a speed of the pump 10, and/or a flow sensor 64 for monitoring a fluid flow from the pump 10. The temperature sensor 60, speed sensor 62 and flow sensor 64 may be communicatively coupled to the controller 58 to provide the temperature, speed and flow measurements thereto. This additional data may be used in combination with the pressure data to refine the determination of pump wear/failure.

The exemplary controller 58 includes a processor 66 coupled to memory 68 and an I/O module 70 via a bus 72. The I/O module 70 receives data from the respective sensors and makes the data available to the processor 66. Application instructions may be stored in the memory 68 and executed by the processor 66 to monitor the health of a hydraulic pump 10 as described herein. Further, it is noted that the illustrated controller is merely exemplary, and other configurations are possible. For example, instead of a processor that executes code stored in memory the controller 58 may be implemented using an application-specific integrated circuit (ASIC), dedicated hardware, or the like.

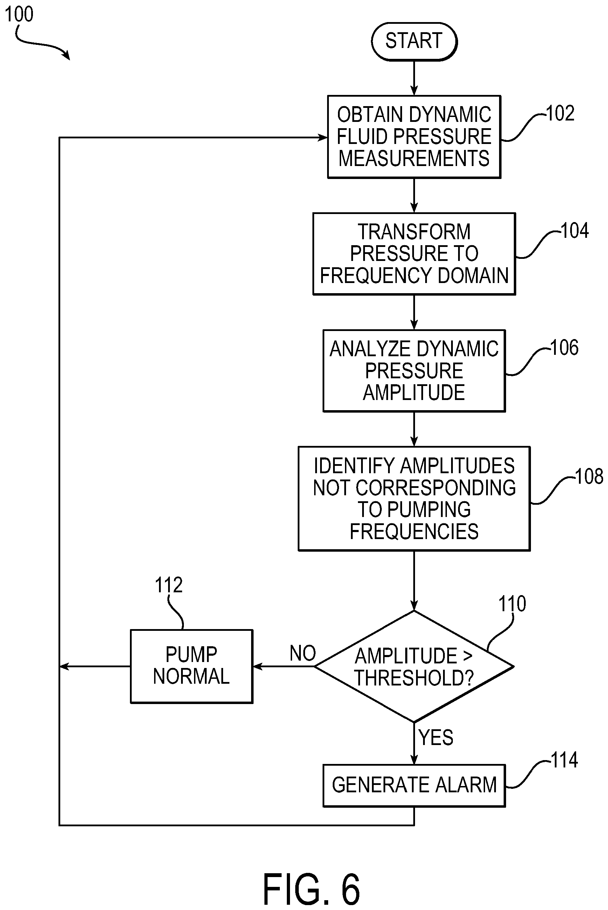

Referring now to Fig. 6, illustrated is a flow diagram that depicts an exemplary method 100 of predicting the health of a hydraulic machine via an electronic device, such as controller 58. Although the method descriptions and flow chart may show specific orders of executing steps, the order of executing the steps may be changed relative to the order described. Also, two or more steps described in succession may be executed concurrently or with partial concurrence. One or more of the described or illustrated steps may be omitted.

Beginning at step 102, dynamic pressure signals corresponding to operation of the hydraulic machine are obtained. Such signals may be obtained, for example, from pressure sensor 56, which monitors fluid pressure in the system 50 at one of a machine outlet, a machine case or a machine inlet. In one embodiment, the dynamic pressure is obtained during periods of steady-state operation. The dynamic pressure signals obtained by the pressure sensor 56 may be sampled at a rate of 5 kHz, and more preferably at a rate of 10 kHz. It should be appreciated, however, that the required sample rate will depend on the speed of the pump (e.g., a pump running at a lower speed would not require as high of a sampling rate as a pump running at a higher speed).

Next at step 104, the obtained dynamic pressure signals are transformed into the frequency domain. Such transformation may be implemented using conventional techniques, such as a Fourier Transform. Once in the frequency domain, the dynamic pressure amplitudes are analyzed as indicated at step 106. In this regard, analyzing may include determining if the dynamic pressure amplitudes correspond to non-pumping frequencies, as indicated at step 108. Analyzing the dynamic pressure amplitudes may also include analyzing the dynamic pressure amplitudes in combination with pump data other than the dynamic pressure amplitudes. Such other data can include, for example, at least one of pump temperature, fluid flow rate, or pump efficiency.

At step 110, the non-pumping frequency dynamic pressure amplitudes may be compared to a threshold level as indicated at step 110. If the non-pumping frequency dynamic pressure amplitudes do not exceed the threshold level (or the only amplitudes that are present correspond to pumping frequencies), then at step 112 it can be concluded that the pump 10 is normal and the method moves back to step 102 and repeats. However, if the non-pumping frequency dynamic pressure amplitudes do exceed the threshold level, then at step 114 it can be concluded that the pump 10 is abnormal (e.g., damaged or worn) and an alarm maybe generated. The method then moves back to step 102 and repeats.

In one embodiment, the analyzing step is performed in real time by the controller 58. Thus, the entire method may be implemented in a single controller. In another embodiment, the analyzing and concluding steps are performed time-shifted relative to the obtaining step. For example, the controller 58 can collect the data and provide the data to an offline controller that performs the analysis (e.g., after each flight).

Accordingly, by monitoring the dynamic pressure amplitudes in the frequency domain, an accurate indication of hydraulic pump/motor condition can be ascertained. This enables maximum use of the pump/motor and minimizes costs for maintaining systems that utilize such hydraulic pumps/motors.

## Claims

1. A system (50) for predicting the health of a hydraulic machine (10), comprising:
a dynamic pressure sensor (56) configured to measure a dynamic fluid pressure corresponding to the hydraulic machine; and
a controller (58) communicatively coupled to the dynamic pressure sensor and operative to receive dynamic pressure data from the dynamic pressure sensor, the controller configured to
convert the dynamic pressure data into the frequency domain,
identify dynamic pressure amplitudes in the frequency domain, and
generate an indication that the hydraulic machine is damaged or worn when dynamic pressure amplitudes in the frequency domain exceed a prescribed threshold and correspond to frequencies other than pumping frequencies,
**characterized by** the controller (58) being configured to:
perform a summation of the dynamic pressure amplitudes at non-pumping frequencies,
trend the summation of the dynamic pressure amplitudes at the non-pumping frequencies over time,
compare the trended values to a threshold level, and
conclude the hydraulic machine is damaged or worn when the trended dynamic pressure amplitudes exceed a prescribed threshold level.

2. The system according to claim 1, further comprising a speed sensor (62) configured to measure a speed of the hydraulic machine, wherein the controller (58) is communicatively coupled to the speed sensor and operative to receive speed data from the speed sensor, and the controller is further configured to
determine at least one of a hydraulic fluid pumping frequency corresponding to the hydraulic machine or a shaft operating frequency corresponding to the hydraulic machine based on the speed data, and
associate the dynamic pressure amplitudes with one of the hydraulic fluid pumping frequency or the shaft operating frequency.

3. The system according to claim 2, further comprising the hydraulic machine, wherein the pressure sensor (56) is fluidically coupled to a fluid port of the hydraulic machine and the speed sensor (62) is operatively coupled to the hydraulic machine.

4. The system according to any one of claims 1-3, wherein the controller (58) is further configured to determine the hydraulic machine is normal when the amplitudes of the dynamic pressure signals at non-pumping frequencies are less than the prescribed thresholds.

5. The system according to any one of claims 1-4, wherein the controller (58) is configured to determine the pumping frequency based on a speed of the hydraulic machine and a number of pumping elements (22,24) of the hydraulic machine.

6. The system according to any one of claims 1-5, wherein the pressure sensor is in fluid communication with at least one of a discharge, a case or an inlet (14) of the hydraulic machine.

7. The system according to any one of claims 1-6, wherein the controller (58) is configured to analyze the dynamic pressure amplitudes in combination with hydraulic machine data other than the dynamic pressure amplitudes.

8. A method for predicting the health of a hydraulic machine (10), comprising:
Obtaining (102), using a pressure sensor (56), dynamic pressure signals corresponding to operation of the hydraulic machine (10);
Analyzing (106), in the frequency domain, dynamic pressure amplitudes in the obtained dynamic pressure signals; and
Concluding the hydraulic machine is damaged or worn when the amplitudes of the dynamic pressure signals at non-pumping frequencies exceed the prescribed thresholds (114),
**characterized by**:
performing a summation of the dynamic pressure amplitudes at non-pumping frequencies,
trending the summation of the dynamic pressure amplitudes at the non-pumping frequencies over time,
comparing the trended values to a threshold level (110), and
concluding that the hydraulic machine is damaged or worn when the trended dynamic pressure amplitudes exceed a prescribed threshold level (114).

9. The method according to claim 8, further comprising concluding the hydraulic machine is normal when the amplitudes of the dynamic pressure signals at non-pumping frequencies are less than the prescribed thresholds.

10. The method according to any one of claims 8-9, wherein a pumping frequency corresponds to the operating speed of the hydraulic machine in revolutions per second multiplied by the number of pumping elements of the hydraulic machine multiplied by any positive integer.

11. The method according to any one of claims 8-10, wherein analyzing comprises analyzing the dynamic pressure amplitudes in combination with hydraulic machine data other than the dynamic pressure amplitudes.

12. The method according to any one of claims 8-11, wherein the analyzing and concluding steps are performed in real time.

13. The method according to any one of claims 8-12, wherein the analyzing and concluding steps are performed time-shifted relative to the obtaining step.

## Patentansprüche

1. System (50) zum Voraussagen des Zustands einer Hydraulikmaschine (10), umfassend:
einen dynamischen Drucksensor (56), der zum Messen eines dynamischen Drucks, welcher der Hydraulikmaschine entspricht, konfiguriert ist; und
eine Steuerung (58), die kommunikationstechnisch an den dynamischen Drucksensor gekoppelt ist und zum Empfangen von dynamischen Druckdaten vom dynamischen Drucksensor betriebsfähig ist, wobei die Steuerung zu Folgendem konfiguriert ist:
Umwandeln der dynamischen Druckdaten in den Frequenzbereich, Identifizieren von dynamischen Druckamplituden im Frequenzbereich, und
Erzeugen einer Anzeige, dass die Hydraulikmaschine beschädigt oder abgenutzt ist, wenn dynamische Druckamplituden im Frequenzbereich eine vorgeschriebene Schwelle übersteigen und anderen Frequenzen als Pumpfrequenzen entsprechen,
**dadurch gekennzeichnet, dass** die Steuerung (58) zu Folgendem konfiguriert ist:
Ausführen einer Summierung der dynamischen Druckamplituden auf Nichtpumpfrequenzen,
Hochrechnen der Summierung der dynamischen Druckamplituden auf den Nichtpumpfrequenzen im Zeitverlauf,
Vergleichen der hochgerechneten Werte mit einem Schwellenwert, und
Rückschließen, dass die Hydraulikmaschine beschädigt oder abgenutzt ist, wenn die hochgerechneten dynamischen Druckamplituden einen vorgeschriebenen Schwellenwert übersteigen.

2. System nach Anspruch 1, ferner umfassend einen Drehzahlsensor (62), der zum Messen einer Drehzahl der Hydraulikmaschine konfiguriert ist, wobei die Steuerung (58) kommunikationstechnisch an den Drehzahlsensor gekoppelt ist und zum Empfangen von Drehzahldaten vom Drehzahlsensor betriebsfähig ist, und wobei die Steuerung ferner zu Folgendem konfiguriert ist:
Bestimmen von zumindest einer einer Hydraulikfluidpumpfrequenz, die der Hydraulikmaschine entspricht, oder einer Wellenbetriebsfrequenz, die der Hydraulikmaschine entspricht, basierend auf den Drehzahldaten, und
Assoziieren der dynamischen Druckamplituden mit einer der Hydraulikfluidpumpfrequenz oder der Wellenbetriebsfrequenz.

3. System nach Anspruch 2, ferner umfassend die Hydraulikmaschine, wobei der Drucksensor (56) fluidtechnisch an einen Fluiddurchlass der Hydraulikmaschine gekoppelt ist und der Drehzahlsensor (62) betriebsfähig an die Hydraulikmaschine gekoppelt ist.

4. System nach einem der Ansprüche 1 bis 3, wobei die Steuerung (58) ferner zum Bestimmen, dass die Hydraulikmaschine normal ist, konfiguriert ist, wenn die Amplituden der dynamischen Drucksignale auf Nichtpumpfrequenzen kleiner als die vorgeschriebenen Schwellen sind.

5. System nach einem der Ansprüche 1 bis 4, wobei die Steuerung (58) zum Bestimmen der Pumpfrequenz basierend auf einer Drehzahl der Hydraulikmaschine und einer Anzahl von Pumpelementen (22, 24) der Hydraulikmaschine konfiguriert ist.

6. System nach einem der Ansprüche 1 bis 5, wobei der Drucksensor in Fluidverbindung mit zumindest einem eines Ablasses, eines Gehäuses oder eines Einlasses (14) der Hydraulikmaschine steht.

7. System nach einem der Ansprüche 1 bis 6, wobei die Steuerung (58) zum Analysieren der dynamischen Druckamplituden in Kombination mit anderen Hydraulikdaten als den dynamischen Druckamplituden konfiguriert ist.

8. Verfahren zum Voraussagen des Zustands einer Hydraulikmaschine (10), umfassend:
Erhalten (102), unter Benutzung eines Drucksensors (56), von dynamischen Drucksignalen, die einem Betrieb der Hydraulikmaschine (10) entsprechen;
Analysieren (106), im Frequenzbereich, von dynamischen Druckamplituden in den erhaltenen dynamischen Drucksignalen; und
Rückschließen, dass die Hydraulikmaschine beschädigt oder abgenutzt ist, wenn die Amplituden der dynamischen Drucksignale auf Nichtpumpfrequenzen die vorgeschriebenen Schwellen (114) übersteigen,
**gekennzeichnet durch**:
Ausführen einer Summierung der dynamischen Druckamplituden auf Nichtpumpfrequenzen,
Hochrechnen der Summierung der dynamischen Druckamplituden auf den Nichtpumpfrequenzen im Zeitverlauf,
Vergleichen der hochgerechneten Werte mit einem Schwellenwert (110), und
Rückschließen, dass die Hydraulikmaschine beschädigt oder abgenutzt ist, wenn die hochgerechneten dynamischen Druckamplituden einen vorgeschriebenen Schwellenwert (114) übersteigen.

9. Verfahren nach Anspruch 8,
ferner umfassend Rückschließen, dass die Hydraulikmaschine normal ist, wenn die Amplituden der dynamischen Drucksignale auf Nichtpumpfrequenzen kleiner als die vorgeschriebenen Schwellen sind.

10. Verfahren nach einem der Ansprüche 8 bis 9, wobei eine Pumpfrequenz der Betriebsdrehzahl der Hydraulikmaschine in Umdrehungen pro Sekunde multipliziert mit der Anzahl von Pumpelementen der Hydraulikmaschine multipliziert mit jeglicher positiven Ganzzahl entspricht.

11. Verfahren nach einem der Ansprüche 8 bis 10, wobei das Analysieren Analysieren der dynamischen Druckamplituden in Kombination mit anderen Hydraulikdaten als den dynamischen Druckamplituden umfasst.

12. Verfahren nach einem der Ansprüche 8 bis 11,
wobei die Analyse- und Rückschlussschritte in Echtzeit ausgeführt werden.

13. Verfahren nach einem der Ansprüche 8 bis 12,
wobei die Analyse- und Rückschlussschritte zeitversetzt bezüglich des Erhaltungsschritts ausgeführt werden.

## Revendications

1. Système (50) pour prédire l'état d'une machine hydraulique (10), comprenant :
un capteur de pression dynamique (56) configuré pour mesurer une pression de fluide dynamique correspondant à la machine hydraulique ; et
un dispositif de commande (58) couplé de manière communicative au capteur de pression dynamique et fonctionnant pour recevoir des données de pression dynamique à partir du capteur de pression dynamique, le dispositif de commande étant configuré pour :
convertir les données de pression dynamique dans le domaine fréquentiel,
identifier des amplitudes de pression dynamique dans le domaine fréquentiel, et
générer une indication selon laquelle la machine hydraulique est endommagée ou usée lorsque les amplitudes de pression dynamique dans le domaine fréquentiel dépassent un seuil prescrit et correspondent à des fréquences autres que des fréquences de pompage,
**caractérisé en ce que** le dispositif de commande (58) est configuré pour :
effectuer une sommation des amplitudes de pression dynamique à des fréquences de non pompage,
enregistrer la tendance de la somme des amplitudes de pression dynamique aux fréquences de non pompage au fil du temps,
comparer les valeurs tendancielles à un niveau de seuil, et
conclure que la machine hydraulique est endommagée ou usée lorsque les amplitudes de pression dynamique tendancielles dépassent un niveau de seuil prescrit.

2. Système selon la revendication 1, comprenant en outre un capteur de vitesse (62) configuré pour mesurer une vitesse de la machine hydraulique, dans lequel le dispositif de commande (58) est couplé de manière communicative au capteur de vitesse et fonctionnant pour recevoir des données de vitesse à partir du capteur de vitesse, et le dispositif de commande est en outre configuré pour
déterminer au moins l'une parmi une fréquence de pompage de fluide hydraulique correspondant à la machine hydraulique ou une fréquence de fonctionnement d'arbre correspondant à la machine hydraulique sur la base des données de vitesse, et
associer les amplitudes de pression dynamique à l'une parmi la fréquence de pompage de fluide hydraulique ou la fréquence de fonctionnement d'arbre.

3. Système selon la revendication 2, comprenant en outre la machine hydraulique, dans lequel le capteur de pression (56) est couplé de manière fluidique à un orifice pour fluide de la machine hydraulique et le capteur de vitesse (62) est couplé de manière fonctionnelle à la machine hydraulique.

4. Système selon l'une quelconque des revendications 1 à 3, dans lequel le dispositif de commande (58) est en outre configuré pour déterminer que la machine hydraulique est normale lorsque les amplitudes des signaux de pression dynamique à des fréquences de non pompage sont inférieures aux seuils prescrits.

5. Système selon l'une quelconque des revendications 1 à 4, dans lequel le dispositif de commande (58) est configuré pour déterminer la fréquence de pompage sur la base d'une vitesse de la machine hydraulique et d'un nombre d'éléments de pompage (22, 24) de la machine hydraulique.

6. Système selon l'une quelconque des revendications 1 à 5, dans lequel le capteur de pression est en communication fluidique avec au moins l'un(e) parmi une sortie, un carter ou une entrée (14) de la machine hydraulique.

7. Système selon l'une quelconque des revendications 1 à 6, dans lequel le dispositif de commande (58) est configuré pour analyser les amplitudes de pression dynamique en combinaison avec des données de machine hydraulique autres que les amplitudes de pression dynamique.

8. Procédé de prédiction de l'état d'une machine hydraulique (10), comprenant le fait :
d'obtenir (102), à l'aide d'un capteur de pression (56), des signaux de pression dynamique correspondant au fonctionnement de la machine hydraulique (10) ;
d'analyser (106), dans le domaine fréquentiel, les amplitudes de pression dynamique dans les signaux de pression dynamique obtenus ; et
de conclure que la machine hydraulique est endommagée ou usée lorsque les amplitudes des signaux de pression dynamique à des fréquences de non pompage dépassent les seuils prescrits (114),
**caractérisé par** le fait :
d'effectuer une sommation des amplitudes de pression dynamique à des fréquences de non pompage,
d'enregistrer la tendance de la sommation des amplitudes de pression dynamique aux fréquences de non pompage au fil du temps,
de comparer les valeurs tendancielles à un niveau de seuil (110), et
de conclure que la machine hydraulique est endommagée ou usée lorsque les amplitudes de pression dynamique tendancielles dépassent un niveau de seuil prescrit (114).

9. Procédé selon la revendication 8, comprenant en outre le fait de conclure que la machine hydraulique est normale lorsque les amplitudes des signaux de pression dynamique à des fréquences de non pompage sont inférieures aux seuils prescrits.

10. Procédé selon l'une quelconque des revendications 8 et 9, dans lequel une fréquence de pompage correspond à la vitesse de fonctionnement de la machine hydraulique en tours par seconde multipliée par le nombre d'éléments de pompage de la machine hydraulique multiplié par un entier positif quelconque.

11. Procédé selon l'une quelconque des revendications 8 à 10, dans lequel l'analyse comprend l'analyse des amplitudes de pression dynamique en combinaison avec des données de machine hydraulique autres que les amplitudes de pression dynamique.

12. Procédé selon l'une quelconque des revendications 8 à 11,
dans lequel les étapes d'analyse et de conclusion sont effectuées en temps réel.

13. Procédé selon l'une quelconque des revendications 8 à 12, dans lequel les étapes d'analyse et de conclusion sont effectuées de manière décalée dans le temps par rapport à l'étape d'obtention.
